(19) Europäisches Patentamt / European Patent Office / Office européen des brevets

(11) **EP 2 256 022 B1**

(12) **EUROPEAN PATENT SPECIFICATION**

(45) Date of publication and mention
of the grant of the patent:
**23.10.2013 Bulletin 2013/43**

(51) Int Cl.:
***B62K 21/08*** (2006.01)

(21) Application number: **10161440.2**

(22) Date of filing: **29.04.2010**

(54) **Method for controlling an electronically adjustable steering damper for a two-wheeled vehicle and apparatus implementing it**

Verfahren zur Steuerung einer elektronisch verstellbaren Lenkdämpfer eines zweiradfahrzeugs und dessen Vorrichtung

Procédé de commande d'un élément amortisseur de direction d'un véhicule deux-roue et dispositif associé

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **21.05.2009 IT MI20090904**

(43) Date of publication of application:
**01.12.2010 Bulletin 2010/48**

(73) Proprietor: **PIAGGIO & C. S.p.A.**
**56025 Pontedera (Pisa) (IT)**

(72) Inventors:
• **Savaresi, Sergio Matteo**
**26100 Cremona (CR) (IT)**
• **Tanelli, Mara**
**20133 Milano (MI) (IT)**
• **Corno, Matteo**
**20040 Bellusco (MB) (IT)**
• **De Filippi, Pierpaolo**
**27040 Mornico Losana (PV) (IT)**
• **Rossi, Stefano**
**20050 Lesmo (MB) (IT)**
• **Spelta, Cristiano**
**20040 Bellusco (MB) (IT)**
• **Fabbri, Luca**
**30036 Santa Maria Di Sala (VE) (IT)**

(74) Representative: **Carangelo, Pierluigi et al**
**Jacobacci & Partners S.p.A.**
**Via Senato, 8**
**20121 Milano (IT)**

(56) References cited:
**EP-A- 1 318 069          EP-A- 1 481 882
DE-A1-102006 024 327**

**EP 2 256 022 B1**

**Description**

The present invention refers to a method for controlling an electronically adjustable steering damper in a two-wheeled vehicle or motor vehicle, and to an apparatus implementing it.

Research in the motorcycling field is increasingly aimed at making vehicles which are more powerful and lighter, which thus have a high natural instability, which can partially be limited by having a steering damper suitable for reducing the vibration modes it undergoes.

Specifically, at low speeds, in a two- wheeled vehicle there are mainly three vibration modes: the pitch of the vehicle, the hop of the tyre and the wobble mode. The pitch mode is due to the rotation of the vehicle around the transversal axis passing through the centre of gravity that causes one suspension to be compressed and the other to be elongated; such a vibration mode generally occurs at low frequencies, since its dynamics are controlled by the overall inertia of the vehicle. The hop mode of the tyre is due to the interaction between the unsprung mass and the rigidity of the front tyre. In particular, the characteristic oscillation frequency depends on the rigidity of the tyre. Since the latter is usually very high due to the inflation pressure, such a mode occurs at frequencies that are greater than the pitch.

Finally, the wobble mode, is an oscillation of the steering around its own axis that typically occurs at frequencies of between 8 Hz and 14 Hz according to the inertia of the steering and to the normal front wheel trail, i.e. the distance between the tyre- road contact point and the intersection of the steering axis with the road surface when the vehicle is in the vertical position and with a zero steering angle.

The wobble mode is a very slightly damped vibration mode and can thus make the motor vehicle very difficult to control.

Moreover, the high frequency, equal to about 10 Hz, at which such a vibration mode occurs, makes the oscillations of the wobble mode difficult to counteract for the driver and are thus very dangerous for his safety.

For these reasons, the steering damper generally used in two-wheeled vehicles mainly has the task of damping the wobble mode making it possible to make the vibration modes associated with it very damped.

For such a purpose, nowadays, in two-wheeled vehicles passive steering dampers are often used having a damping coefficient which is predetermined and obtained from design choices in the damper manufacture step, or steering dampers which can be electronically adjusted, of which one particular type are the semi-active steering dampers, that make it possible to adjust the steering torque instantaneously through a method for controlling.

Document EP 1 481 882 A discloses a method and a system for controlling an electronically adjustable steering damper in a two-wheeled vehicle according to the respective preambles of claim 1 and of claim 13, wherein the control is responsive to the steering angular speed. Other steering damper control systems are disclosed, for example, in documents DE 10 2006 024327 A1 and EP 1 318 069 A.

In particular, in the case of passive steering dampers, the damping coefficient is selected sufficiently high so that it is able to dampen the oscillation due to the wobble mode that occurs at high frequencies.

On the other hand, in the case of semi-active steering dampers, the control methods used to this day are generally based upon the instantaneous speed at which the vehicle advances or upon other variables such as the longitudinal acceleration and follow control laws that make it possible to obtain a damping of the wobble mode.

It is for example known to increase the damping coefficient of the steering damper as the speed and the longitudinal acceleration of the vehicle vary when it is travelling at a speed within a predetermined range. Therefore, for speeds greater than a set value, the damping coefficient remains constantly equal to a maximum value.

The choice of damping coefficient in passive dampers and the known control methods in semi-active dampers, even though they already obtain perfect damping results for the wobble mode, they are not, however, able to oppose the set of the other vibration modes the steering undergoes, in particular at high speed.

Indeed, at high speeds, together with the wobble mode even a further vibration mode occurs: the weave mode.

Oscillations due to the weave mode involve the entire motorcycle. In particular, they are generated from the steering assembly and make the vehicle oscillate around its own vertical axis.

The characteristic frequency of such a vibration mode is typically of between 2 Hz and 4 Hz and is determined by numerous factors such as the position of the barycentre of the rear part, the inertia of the wheels, the normal front wheel trail and the caster angle, i.e. the angle between the steering axis and the vertical axis of the vehicle.

The weave mode is generally very damped at average speeds, but it can become very slightly damped at high speeds and it is very difficult to control for the pilot, since it involves the entire vehicle.

It thus results that, at high speed, around the steering axis of a motor vehicle there are two resonances: the weave resonance at low frequencies and the wobble resonance at high frequencies.

The wobble and weave vibration modes are both affected by the damping coefficient of the steering damper, but in an opposite way: a high damping value makes it possible to attenuate the high frequency resonance, but it amplifies low frequency resonance.

Therefore, a high damping coefficient of the steering damper ensures a good attenuation of the wobble resonance, amplifying however the weave resonance.

The contrast between the effects that one particular damping coefficient value has with respect to the two vibration modes makes the passive steering dampers completely inadequate to attenuate them both.

Moreover, also the known control methods of the steering damper, for high speeds, that substantially keep track of only the wobble are not able to ensure an effective dampening action of the weave as well.

In order to ensure a high safety level of the vehicle, it is thus necessary for there to be a method for controlling an electronically adjustable steering damper, that is effective with respect to both the wobble and weave vibration modes.

The purpose of the present invention is that of avoiding the aforementioned drawbacks and in particular that of conceiving a method for controlling an electronically adjustable steering damper in a two-wheeled vehicle that is able to effectively dampen both the oscillations due to the wobble mode as well as those due to the weave mode.

Another purpose of the present invention is that of providing a method for controlling an electronically adjustable steering damper in a two-wheeled vehicle that offers perfect performance in damping the vibration modes of the steering assembly at both low and high speeds.

A further purpose of the present invention is that of making an apparatus that implements the method conceived for controlling an electronically adjustable steering damper in a two-wheeled vehicle.

These and other purposes according to the present invention are achieved by making a method for controlling an electronically adjustable steering damper in a two-wheeled vehicle as outlined in claim 1. Further characteristics of the method for controlling an electronically adjustable steering damper in a two-wheeled vehicle are object of the dependent claims.

The characteristics and the advantages of a method for controlling an electronically adjustable steering damper in a two-wheeled vehicle according to the present invention shall become clearer from the following description, given as an example and not for limiting purposes, with reference to the attached schematic drawings in which:

- figure 1a is a schematisation of a two-wheeled vehicle showing the factors that affect the rotational dynamics around the steering axis thereof;
- figure 1b is a schematization of a vehicle showing the factors that affect the vertical dynamics thereof;

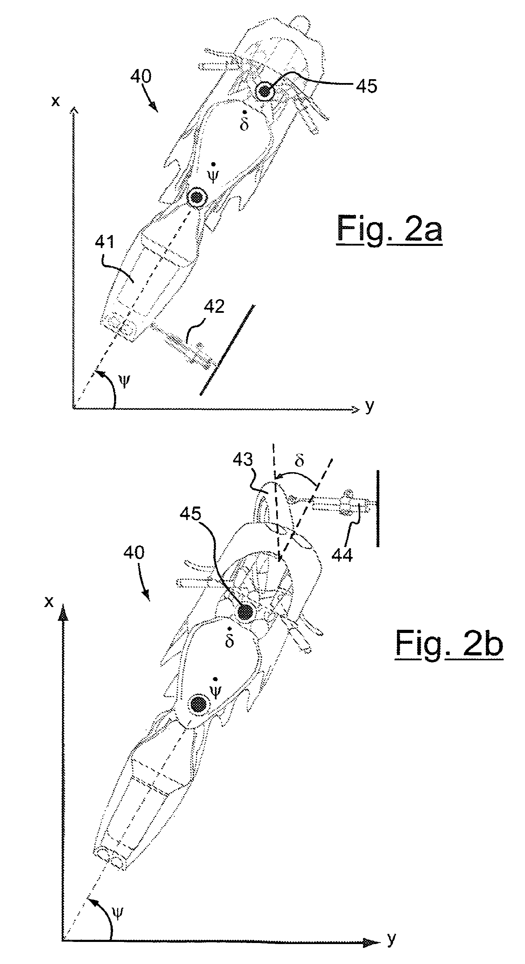

- figure 2a is a top view of a two-wheeled vehicle fixedly connected according to a first control approach;
- figure 2b is a top view of a two-wheeled vehicle fixedly connected according to a second control approach;
- figure 3 is a schematic representation of a control system of the steering damper in a two-wheeled vehicle;
- figure 4a is a schematic representation of a first embodiment of the measurement block of the control system of figure 3;
- figure 4b is a schematic representation of a second embodiment of the measurement block of the control system of figure 3;
- figure 5 is a graph comparing, in the frequency field, the dynamic behaviour that occurs between the steering torque and the steering angle at low speed with or without the control according to the present invention;
- figure 6 is a graph comparing, in the frequency field, the dynamic behaviour that occurs between the steering torque and the steering angle at high speed with or without the control according to the present invention.

With reference to the figures, a control system is shown, wholly indicated with reference numeral 10, comprising a control block 20 that acts upon an actuator 30, which in turn acts upon a two-wheeled vehicle or motor vehicle 40.

There is also a measurement block 50 that detects the instantaneous factors of the motor vehicle 40 and provides them in input to the control block 20.

The actuator 30 installed on the motor vehicle 40 is an electronically adjustable steering damper, i.e. a device which is able to instantaneously dispense an adjustable steering torque. Preferably, such an actuator 30 is a semi-active steering damper.

In determining the method for controlling an electronically adjustable steering damper in a two-wheeled vehicle according to the present invention, the Applicants started, as a non limiting example, with a semi-active steering damper 30 of the type able to provide a steering torque proportional to the rotational speed of the steering $s_\delta$, the proportionality factor of which is electronically adjustable.

Such a steering damper 30 can be made according to any available actuation technology, like for example through a solenoid valve or with magnetorheological technology.

The Applicants have found that the problem of controlling the steering oscillations in such a two-wheeled vehicle caused by an irregular road profile or by disturbances acting upon the steering torque, has numerous similarities with the problem of controlling the vertical dynamics of a vehicle.

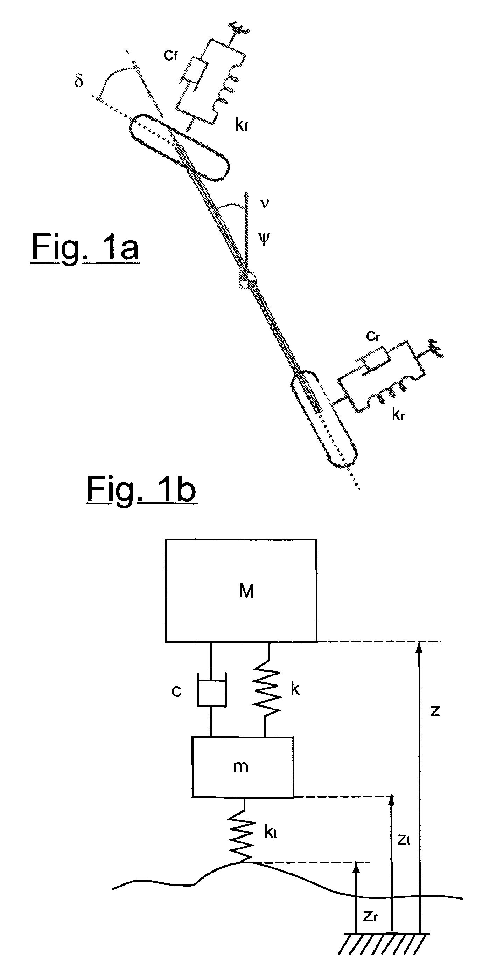

Figures 1a and 1b compare the schematisations of the factors that affect the two dynamics, the rotational dynamics around the steering axis and the vertical ones. In the analysis of systems for controlling the vertical dynamics of a vehicle, the transferring function between the road profile and the movement of the body are usually considered, in said body being there two resonances: that of the "body" at low frequency and that of the "wheel" at high frequency.

Similarly, as already outlined previously, when analyzing the rotational dynamics between the road profile (or steering torque) and the steering angle of a motor vehicle that is travelling at high speed, two resonances can be noticed: the low frequency weave resonance and the high frequency wobble resonance.

Like in the case of controlling the vertical dynamics, also in controlling the rotational dynamics around the steering axis, it can be seen that a high damping value makes it possible to attenuate the high frequency resonance, but it amplifies the low frequency resonance. The Applicants, in order to determine an effective control of the rotational dynamics around the steering axis, began from the hypothesis that the resonance of the body in the case of controlling the vertical dynamics, was similar to that of weave, in the case of controlling the rotational dynamics around the steering axis of motor vehicles, whereas that of the wheel was similar to that of wobble.

Based upon such a hypothesis, the factors that affect the rotational dynamics around the steering axis based upon which the control method should be designed have been identified.

In particular, the controlled variables for designing the method for controlling the dynamics around the steering axis have been identified as, the yaw rate $s_\psi$ of the motor vehicle, i.e. the rotational speed around the vertical axis passing through the barycentre of the vehicle, and the rotational speed of the steering $s_\delta$. According to the similarities identified with the vertical dynamics of vehicles, the Applicants initially followed two distinct control strategies, from which, subsequently, optimized control strategies have been derived, which lead to good damping results for both the high frequency vibration modes, and for those at low frequency.

According to a first control approach, it is wished for there to be a damping of the vibration modes that keeps the body 41 of the motor vehicle attached to a fixed reference, the origin of which is fixedly attached with the centre of mass of the vehicle and that moves rigidly together with the vehicle itself but cannot rotate around the vertical axis of the vehicle.

The damping coefficient value of the steering damper is thus selected thinking of ideally placing a first damper 42 between the body 41 and a fixed reference and exerting a torque equal to:

$$\tau(t) = c \; s_{\dot\psi}(t) \; .$$

The torque that can actually be exerted through the semi-active steering damper 30 is however given by:

$$\tau(t) = c_{in}(t) s_{\dot\delta}(t)$$

By making the two torques equal, it is obtained that if the yaw rate $s_\psi$ and the rotational speed of the steering $s_\delta$ are concordant, then the semi-active damper 30 must impose maximum damping $c_{max}$, otherwise it must impose minimum damping $c_{min}$.

A first control algorithm used in the method for controlling an electronically adjustable steering damper in a motor vehicle according to the present invention is thus formalised as follows:

$$c_{in}(t) = \begin{cases} c_{max} & if \; s_\psi(t) s_{\dot\delta}(t) \geq 0 \\ c_{min} & if \; s_\psi(t) s_{\dot\delta}(t) < 0 \end{cases}$$

A second approach foresees ideally "hooking" the front wheel 43 to a fixed reference, so as to reduce the oscillations of the steering 45.

The damping coefficient value of the steering damper is thus selected thinking of ideally placing a second damper 44 between the front wheel 43 and a fixed reference.

The movement of the steering 45 with respect to a fixed reference is the result of two contributions: the first due to the rotation around the vertical axis of the motor vehicle and the second due to the actual steering angle $s_\delta$.

The logic used in this case thus foresees exerting torque equal to:

$$\tau(t) = c \; \left( s_{\dot\psi}(t) + s_{\dot\delta}(t) \right)$$

Whereas the actual torque is still:

$$\tau(t) = c_{in}(t) s_{\dot{\delta}}(t) \, .$$

By making the two torques equal, a second control algorithm is obtained, which can be used in the method for controlling an electronically adjustable steering damper in a motor vehicle according to the present invention, which is formalized as follows:

$$c_{in}(t) = \begin{cases} c_{\max} & if \ s_{\dot{\delta}}(t)\big(s_{\psi}(t) + s_{\dot{\delta}}(t)\big) \geq 0 \\ c_{\min} & if \ s_{\dot{\delta}}(t)\big(s_{\psi}(t) + s_{\dot{\delta}}(t)\big) < 0 \end{cases}$$

The two control strategies illustrated make it possible to obtain excellent performances from the point of view of the oscillations that involve the body-steering assembly 41,45 (first approach) or the steering 45 (second approach): in particular, the first approach effectively attenuates the disturbances that the motor vehicle 40 undergoes at low frequencies, whereas the high frequency disturbances are better filtered by the second approach, which tends to hook the front wheel 43 at a fixed inertial reference damping all phenomena concerning the steering assembly 45.

According to a preferred aspect of the present invention, selection rules are thus formalised that make it possible to exploit the characteristics and performances of the two algorithms in the best way possible, by using one and/or the other based upon the current manoeuvre.

A first selection rule is based upon a static function that exclusively uses the acceleration and yaw rate measurements to identify whether the oscillations that involve the motor vehicle are in the field of high or low frequencies comparing if these have a higher or lower frequency than a switching frequency $\alpha$. Such a static function has the following expression:

$$f(t) = s_{\dot{\psi}}^2(t) - \alpha^2 s_{\psi}^2(t) \, .$$

Such a static function is characterised by the design parameter $\alpha$, the value of which (in rad/s) represents the switching frequency between the first and second control algorithm.

The design parameter $\alpha$ is selected such as to attenuate in an optimal way both the weave resonance as well as the wobble resonance. The value of such a parameter is experimentally calibrated and it can vary depending on the vehicle, based upon the geometric characteristics of the vehicle itself. It is in any case comprised between the characteristic pulse of the weave mode (typically ranged between 12 and 25 rad/s) and the characteristic pulse of the wobble mode (typically ranged between 50 and 95 rad/s).

If the static function f(t) is less than zero, the first control algorithm is used, if on the other hand, the static function f(t) is greater than or equal to zero, the second control algorithm is used.

A first hybrid control algorithm is thus obtained which can be used in the method for controlling an electronically adjustable steering damper in a motor vehicle according to the present invention that considers the selection rule based upon the static function f(t):

$$c_{in}(t) = \begin{cases} c_{\max} & if \ \big[f(t) < 0 \wedge s_{\psi}(t) s_{\dot{\delta}}(t) \geq 0\big] \vee \big[f(t) \geq 0 \wedge s_{\dot{\delta}}(t)\big(s_{\psi}(t) + s_{\dot{\delta}}(t)\big) \geq 0\big] \\ c_{\min} & if \ \big[f(t) < 0 \wedge s_{\psi}(t) s_{\dot{\delta}}(t) < 0\big] \vee \big[f(t) \geq 0 \wedge s_{\dot{\delta}}(t)\big(s_{\psi}(t) + s_{\dot{\delta}}(t)\big) < 0\big] \end{cases}$$

A second hybrid algorithm foresees the use of a second selection rule based upon the measurement of the steering angle $s_{\delta}$ to establish whether the motor vehicle is stressed at low or high frequency.

For such a purpose, the measurement of the steering angle $s_{\delta}$ is filtered through two resonant bandpass filters of the second order, preferably having very slightly damped poles, the resonance frequencies of which substantially coincide with the characteristic frequencies of the weave and wobble modes, thus obtaining two factors that represent, respectively, the measurement of the steering angle obtained as output of the resonant filter at low frequency $s_{\delta FL}$ and that obtained as output of the resonant filter at high frequency $s_{\delta FH}$.

Subsequently the power $P(s_{\delta FL})$, $P(s_{\delta FH})$ of the two filtered signals $s_{\delta FL}$, $s_{\delta FH}$, are calculated, the average value is worked out $\overline{P}(s_{\delta FL})$, $\overline{P}(s_{\delta FH})$, filtering the power $P(s_{\delta FL})$, $P(s_{\delta FH})$ with a low-pass filter or by using a moving average filter, and such factors are compared.

If the average power of the filtered signal at low frequency $\overline{P}(s_{\delta FL})$ is greater, then the weave resonance is being excited, otherwise it is the wobble resonance. Once estimated the content in frequency of the oscillations that involve the motor vehicle, the first algorithm is applied in the case it is necessary to attenuate the weave, or the second algorithm is applied in the case in which it is necessary to attenuate the wobble.

In particular, a second hybrid control algorithm is thus obtained that selects the damping coefficient of the steering damper based upon the logic:

$$c_{in}(t) = \begin{cases} c_{max} \; if \; \left[\overline{P}(s_{\delta_{FL}}) \geq \overline{P}(s_{\delta_{FH}}) \wedge s_{\dot\psi}(t)s_{\dot\delta}(t) \geq 0\right] \vee \left[\overline{P}(s_{\delta_{FL}}) < \overline{P}(s_{\delta_{FH}}) \wedge s_{\dot\delta}(t)\left(s_{\dot\psi}(t) + s_{\dot\delta}(t)\right) \geq 0\right] \\ c_{min} \; if \; \left[\overline{P}(s_{\delta_{FL}}) \geq \overline{P}(s_{\delta_{FH}}) \wedge s_{\dot\psi}(t)s_{\dot\delta}(t) < 0\right] \vee \left[\overline{P}(s_{\delta_{FL}}) < \overline{P}(s_{\delta_{FH}}) \wedge s_{\dot\delta}(t)\left(s_{\dot\psi}(t) + s_{\dot\delta}(t)\right) < 0\right] \end{cases}$$

A third hybrid control algorithm that can be used in the method for controlling an electronically adjustable steering damper in a motor vehicle according to the present invention foresees to select minimum damping $c_{min}$ or maximum $c_{max}$, depending on the static selection function f(t) or on the rule based upon the power of the signal. In particular, minimum damping $c_{min}$ is selected if the rule of selection used to discriminate the frequency field in which the oscillations that the motor vehicle undergoes indicates that these involve low frequencies, whereas maximum damping $c_{max}$ is selected if the selection rule determines that such oscillations act at high frequency.

In this way it is possible to use a single sensor: in particular the measurement of the yaw rate $s_{\psi}$ is exploited in the first case and the measurement of the steering angle $s_{\delta}$ in the second.

As described previously, the controlled variables for controlling an electronically adjustable steering damper in a motor vehicle identified by the Applicants are the yaw rate $s_{\psi}$ of the motor vehicle and the rotational speed of the steering $s_{\delta}$.

The control algorithms that can be used in the method for controlling according to the present invention indeed use such controlled variables to select the desired damping coefficient $c_{in}(t)$.

Such factors can be measured by using suitable sensors. In particular, the rotational speed of the steering $s_{\delta}$ can be obtained also from a measurement of the steering angle $s_{\delta}$ for example by using a linear or rotary potentiometer and suitable digital filtering through a bandpass filter that approximates an ideal shunt in the frequency band of interest, attenuating however, the measurement noise at high frequency.

The measurement of the yaw rate $s_{\psi}$, obtained for example through a rate gyro, is preferably filtered with a bandpass filter of the second order, with real poles, for example, at a frequency of 30 Hz.

The measurement block 50 of the control scheme 10, in the case in which two sensors are available, is thus used to derive the measurement of the steering angle $s_{\delta}$ and to filter that of the yaw rate $s_{\psi}$.

To reduce the use of sensors, a state observer can however be used to estimate a factor by measuring the other.

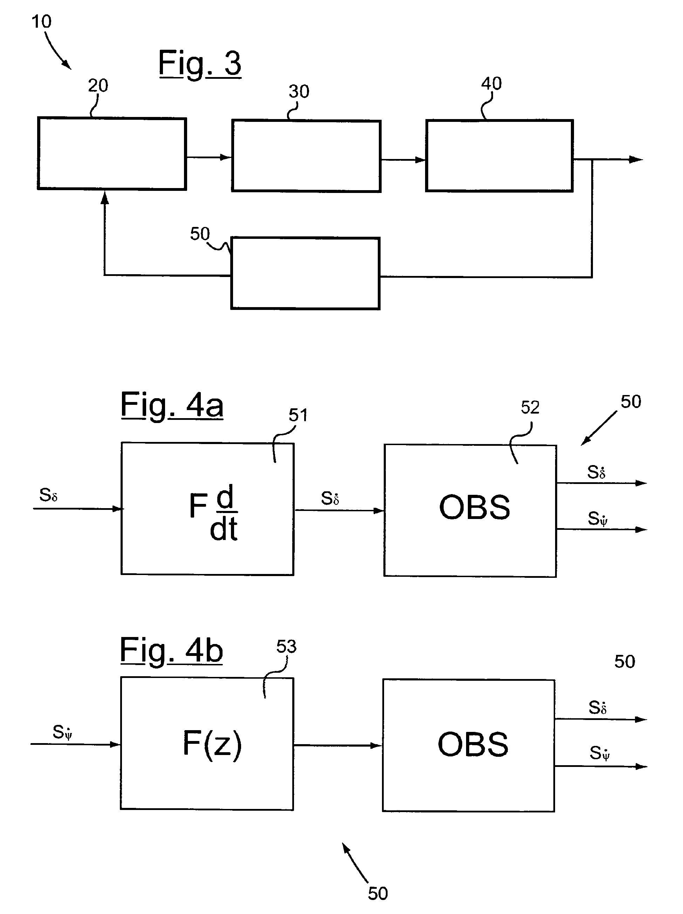

As shown in figure 4a, in the case of measuring only the steering angle $s_{\delta}$, a bandpass filter 51 is used to calculate the rotational speed $s_{\delta}$ of the steering and a suitable observer 52 able to estimate the yaw rate $s_{\psi}$ based upon that of steering $s_{\delta}$. Preferably the observer is of the Luenberger type.

Such a measurement block 50 is preferably used in the second hybrid control algorithm that uses the selection rule based upon the measurement of the steering angle $s_{\delta}$. In such a way, based upon a same measurement of the steering angle $s_{\delta}$, on one hand it is identified, according to the selection rule based upon the power of the signal, whether the oscillations of the motor vehicle act at low or high frequency, and on the other hand the yaw rate $s_{\psi}$ is estimated to calculate the desired damping coefficient value $c_{in}(t)$ of the steering damper.

If however, only a rate gyro is used to measure the yaw rate $s_{\psi}$, the model on which the observer is based upon is such as to be able to estimate the rotational speed of the steering $s_{\delta}$ based upon the yaw rate $s_{\psi}$.

In this case, in the measurement block 50, illustrated in figure 4b, the yaw rate $s_{\psi}$ is filtered with a low-pass filter 53 as described in relation to the case in which two sensors are available, to attenuate the measurement noise at high frequency.

Such a measurement block 50 is preferably used in association with the first hybrid control algorithm that uses the frequency selection rule based upon the static function f(t).

In such a first hybrid control algorithm the yaw acceleration $s_{\psi}$ is calculated from the yaw rate $s_{\psi}$ through a bandpass filter that approximates an ideal shunt in the frequency band of interest. Advantageously, the control method of an electronically adjustable steering damper in a two-wheeled vehicle according to the present invention is implemented through a controlling apparatus comprising processing means connected to at least one measuring means of a controlled variable such as the yaw rate and/or the steering angle.

The processing means receive a signal corresponding to the instantaneous value of at least one measured variable in input by at least one measuring means and, based upon this, they calculate the instantaneous value of the damping coefficient of the steering damper and they possibly estimate the variable not available.

To calculate the damping coefficient, the processing means implement the method for controlling an electronically adjustable steering damper in a two-wheeled vehicle according to the present invention.

To verify the algorithms used in the method for controlling an electronically adjustable steering damper in a two-wheeled vehicle according to the present invention, different simulations have been carried out and the performances of a semi-active steering damper controlled with the performances offered by a passive steering damper with minimum damping coefficient $c_{min}$ and by a passive steering damper having maximum damping coefficient $c_{max}$, have been compared.

The compared algorithms are:

- the first hybrid control algorithm that discerns whether to use the first or the second control algorithm based upon a static selection rule, in which two sensors are used;
- the same algorithm, in which only one sensor is used to detect the yaw rate, whereas the rotational speed of the steering is estimated from the yaw rate by an observer;
- the third hybrid control algorithm that sets a minimum or maximum damping coefficient according to the sign of the static selection function f(t) and in which only the sensor for detecting the yaw rate is used.

The tests were conceived to test the control algorithms when facing a disturbance of the steering torque at different speeds. A sinusoidal sweep has thus been set as the profile of the steering torque, acting in the range of frequencies of interest.

Such tests make it possible to evaluate the damping of the weave and wobble resonances and to gather conclusions for the entire range of frequencies of interest.

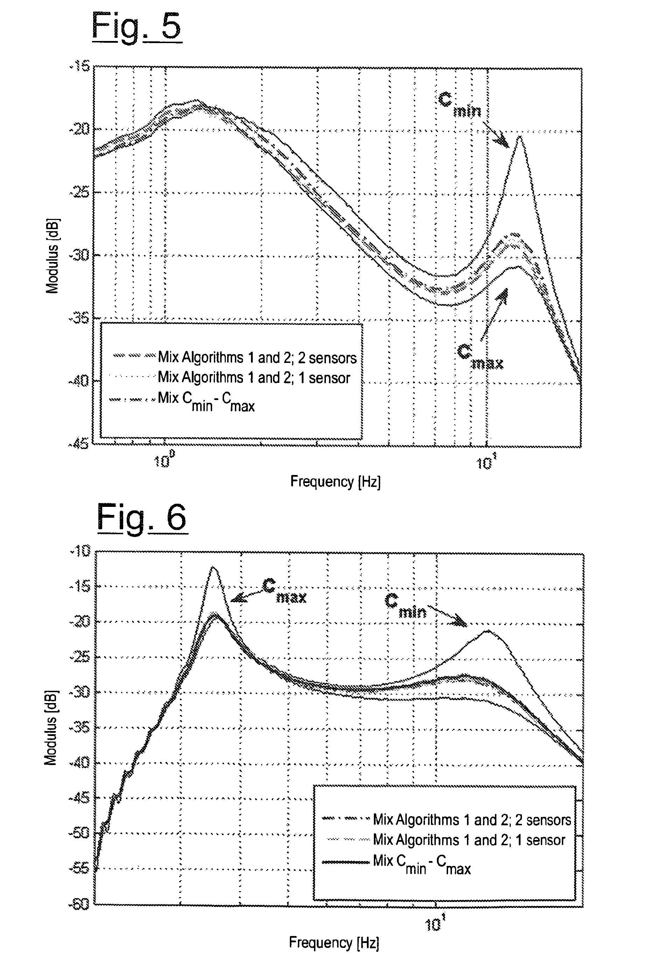

Figure 5 shows the response in frequency between the steering torque and the steering angle for a speed equal to 50 km/h: the only resonance of interest at this speed, since it is more critical for the stability of the motorcycle, is that of high frequency (wobble).

It is thus obtained that the best damping results are obtained through a passive steering damper having a maximum damping coefficient $c_{max}$.

However, also the methods for controlling an electronically adjustable steering damper in a two-wheeled vehicle according to the present invention offer good performances at low speeds.

In particular, the control method using the first hybrid algorithm, i.e. the control algorithm with a static selection rule, ensures an optimal attenuation of the resonance peak even in the case in which only one sensor is used.

For greater speeds both the weave and wobble resonance occur and a passive damper cannot ensure suitable damping in the entire range of frequencies.

Figure 6 shows the response in frequency between the steering torque and the steering angle for a speed of 140 km/h.

The method for controlling an electronically adjustable steering damper in a two-wheeled vehicle according to the present invention using the hybrid control algorithms attenuates the weave very well, offering good attenuation performances also around the wobble resonance.

Moreover, the control method using the first hybrid algorithm is able to attenuate the resonances by offering similar performances in the case in which the measurements are carried out by a single sensor or by two sensors.

From the description made, the characteristics of the method for controlling an electronically adjustable steering damper in a two-wheeled vehicle object of the present invention should be clear, just as the relative advantages should also be clear.

The method for controlling an electronically adjustable steering damper in a two-wheeled vehicle according to the present invention is indeed able to offer excellent damping performances of the vibration modes of the steering at both low, and high speed.

In particular, at high speed it is able to effectively counteract both the wobble mode at high frequency, and the weave mode at low frequency.


**Claims**

1. Method for controlling an electronically adjustable steering damper (30) in a two-wheeled vehicle (40), said steering damper (30) being able to exert a damping torque on a steering assembly (45) of said two-wheeled vehicle (40) that can be adjusted according to a rotational steering speed ($s_{\dot{\delta}}$), **characterised in that** it comprises the following steps:

- determining at least one controlled variable ($s_{\dot\psi}$, $s_{\dot\delta}$) of said two-wheeled vehicle (40), said at least one controlled variable comprising a yaw rate ($s_{\dot\psi}$) of said two-wheeled vehicle; and
- calculating an instantaneous damping coefficient ($c_{in}(t)$) of said electronically adjustable steering damper (30) based on said at least one controlled variable ($s_{\dot\psi}$, $s_{\dot\delta}$).

2. Method for controlling an electronically adjustable steering damper (30) in a two-wheeled vehicle (40) according to claim 1, **characterised in that** it comprises a step consisting of measuring and filtering said yaw rate ($s_{\dot\psi}$).

3. Method for controlling an electronically adjustable steering damper (30) in a two-wheeled vehicle (40) according to claim 2, **characterised in that** said at least one controlled variable in addition comprises said steering speed ($s_{\dot\delta}$) of said two-wheeled vehicle, and **in that** it comprises a step that consists of estimating said steering speed ($s_{\dot\delta}$) based on said yaw rate ($s_{\dot\psi}$).

4. Method for controlling an electronically adjustable steering damper (30) in a two-wheeled vehicle (40) according to claim 1, **characterised in that** said at least one controlled variable further comprises said steering speed ($s_{\dot\delta}$) of said two-wheeled vehicle, and **in that** it comprises a step that consists of measuring a steering angle ($s_{\delta}$) of said two-wheeled vehicle and computing said steering speed ($s_{\dot\delta}$).

5. Method for controlling an electronically adjustable steering damper (30) in a two-wheeled vehicle (40) according to claim 4, **characterised in that** it comprises a step that consists of estimating said yaw rate ($s_{\dot\psi}$) based on said steering speed ($s_{\dot\delta}$).

6. Method for controlling an electronically adjustable steering damper (30) in a two-wheeled vehicle (40) according to any one of the previous claims, **characterised in that** said step of calculating said instantaneous damping coefficient ($c_{in}(t)$) is carried out based on a first control algorithm, said first control algorithm being formalised in:

$$c_{in}(t) = \begin{cases} c_{\max} & if \ s_{\psi}(t)s_{\delta}(t) \geq 0 \\ c_{\min} & if \ s_{\psi}(t)s_{\delta}(t) < 0 \end{cases}.$$

7. Method for controlling an electronically adjustable steering damper (30) in a two-wheeled vehicle (40) according to any one of claims 1 to 5, **characterised in that** said step of calculating said instantaneous damping coefficient ($c_{in}(t)$) is carried out based on a second control algorithm, said second control algorithm being formalised in:

$$c_{in}(t) = \begin{cases} c_{\max} & if \ s_{\dot\delta}(t)\big(s_{\psi}(t) + s_{\delta}(t)\big) \geq 0 \\ c_{\min} & if \ s_{\dot\delta}(t)\big(s_{\psi}(t) + s_{\delta}(t)\big) < 0 \end{cases}.$$

8. Method for controlling an electronically adjustable steering damper (30) in a two-wheeled vehicle (40) according to any one of the previous claims, **characterised in that** it comprises a step that consists of establishing whether said two-wheeled vehicle (40) is subject to low or high frequency oscillations.

9. Method for controlling an electronically adjustable steering damper (30) in a two-wheeled vehicle (40) according to claim 8, **characterised in that** said step of establishing the dynamics of said two-wheeled vehicle (40) comprises checking whether a static selection function (f(t)) of the form $f(t) = s_{\dot\psi}^2(t) - \alpha^2 s_{\psi}^2(t)$ is less than zero or else greater than or equal to zero, if said static function (f(t)) is less than zero, said two-wheeled vehicle (40) experiencing low frequency oscillations, if said static function (f(t)) is greater than or equal to zero, said two-wheeled vehicle (40) being subject to high frequency oscillations.

10. Method for controlling an electronically adjustable steering damper (30) in a two-wheeled vehicle (40) according to claim 8, **characterised in that** said step of establishing the dynamics of said two-wheeled vehicle (40) comprises the stages that consist of:

- filtering said measurement of said steering angle ($s_\delta$) through a first and a second resonant bandpass filter, said first bandpass filter having a first resonance frequency that is lower than a second resonance frequency of said second bandpass filter, obtaining a first filtered signal ($s_{\delta FL}$) and a second filtered signal ($s_{\delta FL}$);
- calculating the power ($P(s_{\delta FL})$, $P(s_{\delta FH})$ of said filtered signals ($s_{\delta FL}$, $s_{\delta FH}$) and determining the average value ($\overline{P}(s_{\delta FL})$, $\overline{P}(s_{\delta FH})$) of said calculated powers ($P(s_{\delta FL})$, $\overline{P}(s_{\delta FH})$);
- comparing said determined average values ($\overline{P}(s_{\delta FL})$, $\overline{P}(s_{\delta FH})$), if the average value ($\overline{P}(s_{\delta FL})$) of the power ($\overline{P}(s_{\delta FL})$) of said first filtered signal ($s_{\delta FL}$) is greater than the average value ($\overline{P}(s_{\delta FH})$) of the power ($\overline{P}(s_{\delta FH})$) of said second filtered signal ($s_{\delta FH}$), said two-wheeled vehicle (40) being subject to low frequency oscillations, if the average value ($\overline{P}(s_{\delta FH})$) of the power ($\overline{P}(s_{\delta FH})$) of said second filtered signal ($s_{\delta FH}$) is greater than the average value ($\overline{P}(s_{\delta FL})$) of the power ($\overline{P}(s_{\delta FL})$) of said first filtered signal ($s_{\delta FL}$), said two-wheeled vehicle (40) being subject to high frequency oscillations.

11. Method for controlling an electronically adjustable steering damper (30) in a two-wheeled vehicle (40) according to one of claims 8 to 10, **characterised in that** it comprises the step that consists of applying said first control algorithm, if said two-wheeled vehicle (40) is subject to low frequency oscillations, and applying said second control algorithm, if said two-wheeled vehicle (40) is subject to high frequency oscillations.

12. Method for controlling an electronically adjustable steering damper (30) in a two-wheeled vehicle (40) according to one of claims 8 to 10, **characterised in that** it comprises the step that consists of setting said instantaneous damping coefficient ($c_{in}(t)$)) equal to a maximum damping coefficient ($c_{max}$) if said two-wheeled vehicle (40) is subject to high frequency oscillations, and setting said instantaneous damping coefficient ($c_{in}(t)$)) equal to a minimum damping coefficient ($c_{min}$) if said two-wheeled vehicle (40) is subject to low frequency oscillations.

13. Apparatus for controlling an electronically adjustable steering damper (30) in a two-wheeled vehicle (40), said steering damper being able to exert a damping torque on a steering assembly (45) of said two-wheeled vehicle (40) that can be adjusted according to a steering speed ($s_{\dot\delta}$), said control apparatus comprising processing means connected to at least one means for measuring at least one controlled variable ($s_{\dot\psi}, s_{\dot\delta}$), said processing means being suitable for calculating an instantaneous value of a damping coefficient ($c_{in}(t)$) of said steering damper, **characterised in that** said at least one measuring means comprises a means for measuring a yaw rate ($s_{\dot\psi}$) of said two-wheeled vehicle (40) and/or a means for measuring a steering angle ($s_\delta$).

14. Apparatus for controlling an electronically adjustable steering damper (30) in a two-wheeled vehicle (40) according to claim 13, **characterised in that** said processing means comprise means for calculating a steering speed ($s_{\dot\delta}$) based on a steering angle ($s_\delta$) measured by said means for measuring a steering angle ($s_\delta$) and/or based on a yaw rate ($s_{\dot\psi}$) measured by said means for measuring a yaw rate ($s_{\dot\psi}$).

15. Apparatus for controlling an electronically adjustable steering damper (30) in a two-wheeled vehicle (40) according to claim 14, **characterised in that** said processing means comprise means for calculating a yaw rate ($s_{\dot\psi}$) based on said calculated steering speed ($s_{\dot\delta}$).

16. Apparatus for controlling an electronically adjustable steering damper (30) in a two-wheeled vehicle (40) according to any one of claims 13 to 15, **characterised in that** said processing means are suitable for implementing the control method according to any one of claims 1 to 12.

**Patentansprüche**

1. Verfahren zum Regeln/Steuern eines elektronisch einstellbaren Lenkungsdämpfers (30) in einem Zweiradfahrzeug (40), wobei der Lenkungsdämpfer (30) dazu in der Lage ist, ein Dämpfungsdrehmoment auf eine Lenkungsanordnung (45) des Zweiradfahrzeugs (40) auszuüben, welches gemäß einer Drehlenkgeschwindigkeit ($s_{\dot\delta}$) einstellbar ist, **dadurch gekennzeichnet, dass** es die folgenden Schritte umfasst:

Bestimmen wenigstens einer geregelten/gesteuerten Variable ($s_{\dot\psi}, s_{\dot\delta}$) des Zweiradfahrzeugs (40), wobei die wenigstens eine geregelte/gesteuerte Variable eine Giergeschwindigkeit ($s_{\dot\psi}$) des Zweiradfahrzeugs umfasst; und
Berechnen eines momentanen Dämpfungskoeffizienten ($c_{in}(t)$) des elektronisch einstellbaren Lenkungsdämpfers (30) basierend auf der wenigstens einen geregelten/gesteuerten Variable ($s_{\dot\psi}, s_{\dot\delta}$).

**2.** Verfahren zum Regeln/Steuern eines elektronisch einstellbaren Lenkungsdämpfers (30) in einem Zweiradfahrzeug (40) nach Anspruch 1,
**dadurch gekennzeichnet, dass** es einen Schritt umfasst, welcher aus einem Messen und Filtern der Giergeschwindigkeit ($s_\psi$) besteht.

**3.** Verfahren zum Regeln/Steuern eines elektronisch einstellbaren Lenkungsdämpfers (30) in einem Zweiradfahrzeug (40) nach Anspruch 2,
**dadurch gekennzeichnet, dass** die wenigstens eine geregelte/gesteuerte Variable zusätzlich die Lenkgeschwindigkeit ($s_\delta$) des Zweiradfahrzeugs umfasst, und dass es einen Schritt umfasst, welcher aus einem Schätzen der Lenkgeschwindigkeit ($s_\delta$) basierend auf der Giergeschwindigkeit ($s_\psi$) besteht.

**4.** Verfahren zum Regeln/Steuern eines elektronisch einstellbaren Lenkungsdämpfers (30) in einem Zweiradfahrzeug (40) nach Anspruch 1,
**dadurch gekennzeichnet, dass** die wenigstens eine geregelte/gesteuerte Variable ferner die Lenkgeschwindigkeit ($s_\delta$) des Zweiradfahrzeugs umfasst, und dass es einen Schritt umfasst, welcher aus einem Messen eines Lenkwinkels ($s_\delta$) des Zweiradfahrzeugs und einem Berechnen der Lenkgeschwindigkeit ($s_\delta$) besteht.

**5.** Verfahren zum Regeln/Steuern eines elektronisch einstellbaren Lenkungsdämpfers (30) in einem Zweiradfahrzeug (40) nach Anspruch 4,
**dadurch gekennzeichnet, dass** es einen Schritt umfasst, welcher aus einem Schätzen der Giergeschwindigkeit ($s_\psi$) basierend auf der Lenkgeschwindigkeit ($s_\delta$) besteht.

**6.** Verfahren zum Regeln/Steuern eines elektronisch einstellbaren Lenkungsdämpfers (30) in einem Zweiradfahrzeug (40) nach einem der vorhergehenden Ansprüche,
**dadurch gekennzeichnet, dass** der Schritt zum Berechnen des momentanen Dämpfungskoeffizienten ($c_{in}(t)$) basierend auf einem ersten Regelungs-/Steuerungsalgorithmus ausgeführt wird, wobei der erste Regelungs-/Steuerungsalgorithmus ausgedrückt ist durch:

$$c_{in}(t) = \begin{cases} c_{max}, & \text{falls } s_{\dot\psi}(t)\, s_{\dot\delta}(t) \geq 0 \\ c_{min}, & \text{falls } s_{\dot\psi}(t)\, s_{\dot\delta}(t) < 0 \end{cases}.$$

**7.** Verfahren zum Regeln/Steuern eines elektronisch einstellbaren Lenkungsdämpfers (30) in einem Zweiradfahrzeug (40) nach einem der Ansprüche 1 bis 5,
**dadurch gekennzeichnet, dass** der Schritt zum Berechnen des momentanen Dämpfungskoeffizienten ($c_{in}(t)$) basierend auf einem zweiten Regelungs-/Steuerungsalgorithmus ausgeführt wird, wobei der zweite Regelungs-/Steuerungsalgorithmus ausgedrückt ist durch:

$$c_{in}(t) = \begin{cases} c_{max}, & \text{falls } s_{\dot\delta}(t)(s_{\dot\psi}(t) + s_{\dot\delta}(t)) \geq 0 \\ c_{min}, & \text{falls } s_{\dot\delta}(t)(s_{\dot\psi}(t) + s_{\dot\delta}(t)) < 0 \end{cases}.$$

**8.** Verfahren zum Regeln/Steuern eines elektronisch einstellbaren Lenkungsdämpfers (30) in einem Zweiradfahrzeug (40) nach einem der vorhergehenden Ansprüche,
**dadurch gekennzeichnet, dass** es einen Schritt umfasst, welcher darin besteht, zu ermitteln, ob das Zweiradfahrzeug (40) niederfrequenten oder hochfrequenten Schwingungen ausgesetzt ist.

**9.** Verfahren zum Regeln/ Steuern eines elektronisch einstellbaren Lenkungsdämpfers (30) in einem Zweiradfahrzeug (40) nach Anspruch 8,
**dadurch gekennzeichnet, dass** der Schritt zum Ermitteln der Dynamik des Zweiradfahrzeugs (40) ein Überprüfen umfasst, ob eine statische Auswahlfunktion ($f(t)$) der Form $f(t) = s_{\dot\psi}^2(t) - \alpha^2 s_{\dot\psi}^2(t)$ kleiner als Null oder sonst größer als oder gleich Null ist, wobei wenn die statische Funktion ($f(t)$) kleiner als Null ist, erfährt das Zweiradfahrzeug (40) niederfrequente Schwingungen, wobei wenn die statische Funktion ($f(t)$) größer als oder gleich Null ist, ist das Zweiradfahrzeug (40) hochfrequenten Schwingungen ausgesetzt.

**10.** Verfahren zum Regeln/Steuern eines elektronisch einstellbaren Lenkungsdämpfers (30) in einem Zweiradfahrzeug (40) nach Anspruch 8,
**dadurch gekennzeichnet, dass** der Schritt zum Ermitteln der Dynamik des Zweiradfahrzeugs (40) die Stufen umfasst, bestehend aus:

- Filtern der Messung des Lenkwinkels ($s_\delta$) durch einen ersten und einen zweiten Resonanzbandpassfilter, wobei der erste Bandpassfilter eine erste Resonanzfrequenz aufweist, welche kleiner als eine zweite Resonanzfrequenz des zweiten Bandpassfilters ist, wobei ein erstes gefiltertes Signal ($s_{\delta FL}$) und ein zweites gefiltertes Signal ($s_{\delta FH}$) erhalten wird;
- Berechnen der Leistung ($P(s_{\delta FL})$, $P(s_{\delta FH})$) des gefilterten Signals ($s_{\delta FL}$, $s_{\delta FH}$) und Bestimmen des Mittelwerts ($\overline{P}(s_{\delta FL})$, $\overline{P}(s_{\delta FH})$) der berechneten Leistungen ($P(s_{\delta FL})$, $P(s_{\delta FH})$);
- Vergleichen der bestimmten Mittelwerte ($\overline{P}(s_{\delta FL})$, $\overline{P}(s_{\delta FH})$), wobei wenn der Mittelwert ($\overline{P}(s_{\delta FL})$) der Leistung ($P(s_{\delta FL})$) des ersten gefilterten Signals ($s_{\delta FL}$) größer als der Mittelwert ($\overline{P}(s_{\delta FH})$) der Leistung ($P(s_{\delta FH})$) des zweiten gefilterten Signals ($s_{\delta FH}$) ist, ist das Zweiradfahrzeug (40) niederfrequenten Schwingungen ausgesetzt, wobei wenn der Mittelwert ($\overline{P}(s_{\delta FH})$) der Leistung ($P(s_{\delta FH})$) des zweiten gefilterten Signals ($s_{\delta FH}$) größer als der Mittelwert ($\overline{P}(s_{\delta FL})$) der Leistung ($P(s_{\delta FL})$) des ersten gefilterten Signals ($s_{\delta FL}$) ist, ist das Zweiradfahrzeug (40) hochfrequenten Schwingungen ausgesetzt.

**11.** Verfahren zum Regeln/Steuern eines elektronisch einstellbaren Lenkungsdämpfers (30) in einem Zweiradfahrzeug (40) nach einem der Ansprüche 8 bis 10,
**dadurch gekennzeichnet, dass** es den Schritt umfasst, welcher in einem Anwenden des ersten Regelungs-/Steuerungsalgorithmus besteht, wenn das Zweiradfahrzeug (40) niederfrequenten Schwingungen ausgesetzt ist, und in einem Anwenden des zweiten Regelungs-/Steuerungsalgorithmus besteht, wenn das Zweiradfahrzeug (40) hochfrequenten Schwingungen ausgesetzt ist.

**12.** Verfahren zum Regeln/Steuern eines elektronisch einstellbaren Lenkungsdämpfers (30) in einem Zweiradfahrzeug (40) nach einem der Ansprüche 8 bis 10,
**dadurch gekennzeichnet, dass** es den Schritt umfasst, welcher darin besteht, den momentanen Dämpfungskoeffizienten ($c_{in}(t)$) gleich einem maximalen Dämpfungskoeffizienten ($c_{max}$) zu setzen, wenn das Zweiradfahrzeug (40) hochfrequenten Schwingungen ausgesetzt ist, und darin besteht, den momentanen Dämpfungskoeffizienten ($c_{in}(t)$) gleich einem minimalen Dämpfungskoeffizienten ($c_{min}$) zu setzen, wenn das Zweiradfahrzeug (40) niederfrequenten Schwingungen ausgesetzt ist.

**13.** Vorrichtung zum Regeln/Steuern eines elektronisch einstellbaren Lenkungsdämpfers (30) in einem Zweiradfahrzeug (40), wobei der Lenkungsdämpfer dazu in der Lage ist, ein Dämpfungsdrehmoment auf eine Lenkungsanordnung (45) des Zweiradfahrzeugs (40) auszuüben, welches gemäß einer Lenkgeschwindigkeit ($s_{\dot\delta}$) einstellbar ist, wobei die Regelungs-/Steuerungsvorrichtung Verarbeitungsmittel umfasst, welche mit wenigstens einem Mittel zum Messen wenigstens einer geregelten/gesteuerten Variable ($s_\psi$, $s_{\dot\delta}$) verbunden sind, wobei die Verarbeitungsmittel dazu geeignet sind, einen momentanen Wert eines Dämpfungskoeffizienten ($c_{in}(t)$) des Lenkungsdämpfers zu berechnen,
**dadurch gekennzeichnet, dass** das wenigstens eine Messmittel Mittel zum Messen einer Giergeschwindigkeit ($s_{\dot\psi}$) des Zweiradfahrzeugs (40) oder/und Mittel zum Messen eines Lenkwinkels ($s_\delta$) umfasst.

**14.** Vorrichtung zum Regeln/Steuern eines elektronisch einstellbaren Lenkungsdämpfers (30) in einem Zweiradfahrzeug (40) nach Anspruch 13,
**dadurch gekennzeichnet, dass** die Verarbeitungsmittel Mittel umfassen zum Berechnen einer Lenkgeschwindigkeit ($s_{\dot\delta}$) basierend auf einem von den Mitteln zum Messen eines Lenkwinkels ($s_\delta$) gemessenen Lenkwinkel ($s_\delta$) oder/und basierend auf einer von den Mitteln zum Messen einer Giergeschwindigkeit ($s_{\dot\psi}$) gemessenen Giergeschwindigkeit ($s_{\dot\psi}$).

**15.** Vorrichtung zum Regeln/Steuern eines elektronisch einstellbaren Lenkungsdämpfers (30) in einem Zweiradfahrzeug (40) nach Anspruch 14,
**dadurch gekennzeichnet, dass** die Verarbeitungsmittel Mittel zum Berechnen einer Giergeschwindigkeit ($s_{\dot\psi}$) basierend auf der berechneten Lenkgeschwindigkeit ($s_{\dot\delta}$) umfassen.

**16.** Vorrichtung zum Regeln/Steuern eines elektronisch einstellbaren Lenkungsdämpfers (30) in einem Zweiradfahrzeug (40) nach einem der Ansprüche 13 bis 15,
**dadurch gekennzeichnet, dass** die Verarbeitungsmittel dazu geeignet sind, das Regelungs-/Steuerungsverfahren nach einem der Ansprüche 1 bis 12 zu implementieren.

**Revendications**

1. Procédé pour commander un amortisseur de direction ajustable électroniquement (30) dans un véhicule à deux roues (40), ledit amortisseur de direction (30) étant capable d'exercer un couple d'amortissement sur un ensemble de direction (45) dudit véhicule à deux roues (40) qui peut être ajusté en fonction d'une vitesse de braquage de rotation ($s_{\dot{\delta}}$), **caractérisé en ce qu'**il comprend les étapes suivantes :

   - de détermination d'au moins une variable commandée ($s_{\dot{\psi}},s_{\dot{\delta}}$) dudit véhicule à deux roues (40), ladite au moins une variable commandée ayant une amplitude de mouvement de lacet ($s_{\dot{\psi}}$) dudit véhicule à deux roues ; et
   - de calcul d'un coefficient d'amortissement instantané ($c_{in}(t)$) dudit amortisseur de direction ajustable électroniquement (30) sur la base de ladite au moins une variable commandée ($s_{\dot{\psi}},s_{\dot{\delta}}$).

2. Procédé pour commander un amortisseur de direction ajustable électroniquement (30) dans un véhicule à deux roues (40) selon la revendication 1, **caractérisé en ce qu'**il comprend une étape consistant en la mesure et le filtrage de ladite amplitude de mouvement de lacet ($s_{\dot{\psi}}$).

3. Procédé pour commander un amortisseur de direction ajustable électroniquement (30) dans un véhicule à deux roues (40) selon la revendication 2, **caractérisé en ce que** ladite au moins une variable commandée comprend de plus ladite vitesse de braquage ($s_{\dot{\delta}}$) dudit véhicule à deux roues, et **en ce qu'**il comprend une étape qui consiste en l'estimation de ladite vitesse de braquage ($s_{\dot{\delta}}$) sur la base de ladite amplitude de mouvement de lacet ($s_{\dot{\psi}}$).

4. Procédé pour commander un amortisseur de direction ajustable électroniquement (30) dans un véhicule à deux roues (40) selon la revendication 1, **caractérisé en ce que** ladite au moins une variable commandée comprend en outre ladite vitesse de braquage ($s_{\dot{\delta}}$) dudit véhicule à deux roues, et **en ce qu'**il comprend une étape qui consiste en la mesure d'un angle de braquage ($s_{\delta}$) dudit véhicule à deux roues et le calcul de ladite vitesse de braquage ($s_{\dot{\delta}}$).

5. Procédé pour commander un amortisseur de direction ajustable électroniquement (30) dans un véhicule à deux roues (40) selon la revendication 4, **caractérisé en ce qu'**il comprend une étape qui consiste en l'estimation de ladite amplitude de mouvement de lacet ($s_{\dot{\psi}}$) sur la base de ladite vitesse de braquage ($s_{\dot{\delta}}$).

6. Procédé pour commander un amortisseur de direction ajustable électroniquement (30) dans un véhicule à deux roues (40) selon l'une quelconque des revendications précédentes, **caractérisé en ce que** ladite étape de calcul dudit coefficient d'amortissement instantané ($c_{in}(t)$) est effectuée sur la base d'un premier algorithme de commande, ledit premier algorithme de commande étant formalisé en :

$$c_{in}(t) = \begin{cases} c_{max} & if\ s_{\psi}(t)s_{\delta}(t) \geq 0 \\ c_{min} & if\ s_{\psi}(t)s_{\delta}(t) < 0 \end{cases}.$$

7. Procédé pour commander un amortisseur de direction ajustable électroniquement (30) dans le véhicule à deux roues (40) selon l'une quelconque des revendications 1 à 5, **caractérisé en ce que** ladite étape de calcul dudit coefficient d'amortissement instantané ($c_{in}(t)$) est effectuée sur la base d'un deuxième algorithme de commande, ledit deuxième algorithme de commande étant formalisé en :

$$c_{in}(t) = \begin{cases} c_{max} & if\ s_{\delta}(t)\big(s_{\psi}(t) + s_{\delta}(t)\big) \geq 0 \\ c_{min} & if\ s_{\delta}(t)\big(s_{\psi}(t) + s_{\delta}(t)\big) < 0 \end{cases}.$$

8. Procédé pour commander un amortisseur de direction ajustable électroniquement (30) dans un véhicule à deux roues (40) selon l'une quelconque des revendications précédentes, **caractérisé en ce qu'**il comprend une étape qui consiste en la détermination si ledit véhicule à deux roues (40) est soumis ou non à des oscillations basse ou haute fréquence.

9. Procédé pour commander un amortisseur de direction ajustable électroniquement (30) dans un véhicule à deux roues (40) selon la revendication 8, **caractérisé en ce que** ladite étape de détermination des dynamiques dudit véhicule à deux roues (40) comprend la vérification si une fonction de sélection statique (f(t)) de la forme

$$f(t) = s_{\dot{\psi}}^{2}(t) - \alpha^{2} s_{\dot{\psi}}^{2}(t)$$ est inférieure à zéro ou autrement supérieure ou égale à zéro, si ladite fonction statique (f(t)) est inférieure à zéro, ledit véhicule à deux roues (40) subissant des oscillations basse fréquence, si ladite fonction statique (f(t)) est supérieure ou égale à zéro, ledit véhicule à deux roues (40) étant soumis à des oscillations haute fréquence.

10. Procédé pour commander un amortisseur de direction ajustable électroniquement (30) dans un véhicule à deux roues (40) selon la revendication 8, **caractérisé en ce que** ladite étape de détermination des dynamiques dudit véhicule à deux roues (40) comprend les étages qui consistent en :

   - le filtrage de ladite mesure dudit angle de braquage ($s_{\delta}$) par l'intermédiaire de premier et deuxième filtres passe-bande résonants, ledit premier filtre passe-bande ayant une première fréquence de résonance qui est inférieure à une deuxième fréquence de résonance dudit deuxième filtre passe-bande, obtenant un premier signal filtré ($s_{\delta FL}$) et un deuxième signal filtré ($s_{\delta FH}$);
   - le calcul de la puissance ($P(s_{\delta FL})$, $P(s_{\delta FH})$) desdits signaux filtrés ($s_{\delta FL}$, $s_{\delta FH}$) et la détermination de la valeur moyenne ($\overline{P}(s_{\delta FL})$, $\overline{P}(s_{\delta FH})$) desdites puissances ($P(s_{\delta FL})$, ($P(s_{\delta FH})$) calculées ;
   - la comparaison desdites valeurs moyennes ($\overline{P}(s_{\delta FL})$, $\overline{P}(s_{\delta FH})$) déterminées, si la valeur moyenne ($\overline{P}(s_{\delta FL})$) de la puissance ($\overline{P}(s_{\delta FL})$) dudit premier signal filtré ($s\delta FL$) est supérieure à la valeur moyenne ($\overline{P}(s_{\delta FH})$) de la puissance ($\overline{P}(s_{\delta FH})$) dudit deuxième signal filtré ($s_{\delta FH}$), ledit véhicule à deux roues (40) étant soumis à des oscillations basse fréquence, si la valeur moyenne ($\overline{P}(s_{\delta FH})$) de la puissance ($\overline{P}(s_{\delta FH})$) dudit deuxième signal filtré ($s_{\delta FH}$) est supérieure à la valeur moyenne ($\overline{P}(s_{\delta FL})$) de la puissance ($\overline{P}(s_{\delta FL})$) dudit premier signal filtré ($s_{\delta FL}$), ledit véhicule à deux roues (40) étant soumis à des oscillations haute fréquence.

11. Procédé pour commander un amortisseur de direction ajustable électroniquement (30) dans un véhicule à deux roues (40) selon l'une des revendications 8 à 10, **caractérisé en ce qu'**il comprend l'étape qui consiste en l'application dudit premier algorithme de commande, si ledit véhicule à deux roues (40) est soumis à des oscillations basse fréquence, et l'application dudit deuxième algorithme de commande, si ledit véhicule à deux roues (40) est soumis à des oscillations haute fréquence.

12. Procédé pour commander un amortisseur de direction ajustable électroniquement (30) d'un véhicule à deux roues (40) selon l'une des revendications 8 à 10, **caractérisé en ce qu'**il comprend l'étape qui consiste à fixer ledit coefficient d'amortissement instantané ($c_{in}(t)$) égal à un coefficient d'amortissement maximum ($c_{max}$) si ledit véhicule à deux roues (40) est soumis à des oscillations haute fréquence et fixer ledit coefficient d'amortissement instantané ($c_{in}(t)$) égal à un coefficient d'amortissement minimum ($c_{min}$) si ledit véhicule à deux roues (40) est soumis à des oscillations basse fréquence.

13. Appareil pour commander un amortisseur de direction ajustable électroniquement (30) dans un véhicule à deux roues (40), ledit amortisseur de direction étant capable d'exercer un couple d'amortissement sur un ensemble de direction (45) dudit véhicule à deux roues (40) qui peut être ajusté en fonction d'une vitesse de braquage ($s_{\dot{\delta}}$), ledit appareil de commande comprenant des moyens de traitement connectés à au moins un moyen pour mesurer au moins une variable commandée ($s_{\dot{\psi}}, s_{\dot{\delta}}$), lesdits moyens de traitement étant appropriés pour calculer une valeur instantanée d'un coefficient d'amortissement ($c_{in}(t)$) dudit amortisseur de direction, **caractérisé en ce que** ledit au moins un moyen de mesure comprend des moyens pour mesurer une amplitude de mouvement de lacet ($s_{\dot{\psi}}$) dudit véhicule à deux roues (40) et/ou des moyens pour mesurer un angle de braquage ($s_{\delta}$).

14. Appareil pour commander un amortisseur de direction ajustable électroniquement (30) dans un véhicule à deux roues (40) selon la revendication 13, **caractérisé en ce que** lesdits moyens de traitement comprennent des moyens pour calculer une vitesse de braquage ($s_{\dot{\delta}}$) sur la base d'un angle de braquage ($s_{\delta}$) mesuré par lesdits moyens pour mesurer un angle de braquage ($s_{\delta}$) et/ou sur la base d'une amplitude de mouvement de lacet ($s_{\dot{\psi}}$) mesurée par lesdits moyens pour mesurer une amplitude de mouvement de lacet ($s_{\dot{\psi}}$).

**15.** Appareil pour commander un amortisseur de direction ajustable électroniquement (30) dans un véhicule à deux roues (40) selon la revendication 14, **caractérisé en ce que** lesdits moyens de traitement comprennent des moyens pour calculer une amplitude de mouvement de lacet ($s_{\dot{\psi}}$) sur la base de ladite vitesse de braquage ($s_{\dot{\delta}}$) calculée.

**16.** Appareil pour commander un amortisseur de direction ajustable électroniquement (30) dans un véhicule à deux roues (40) selon l'une quelconque des revendications 13 à 15, **caractérisé en ce que** lesdits moyens de traitement sont appropriés pour mettre en oeuvre le procédé de commande selon l'une quelconque des revendications 1 à 12.

Fig. 1a

Fig. 1b

Fig. 2a

Fig. 2b

10

## Fig. 3

20     30     40

50

## Fig. 4a

51     52     50

$S_\delta$     $F\dfrac{d}{dt}$     $S_{\dot\delta}$     OBS     $S_{\dot\delta}$     $S_{\dot\psi}$

## Fig. 4b

53     50

$S_{\dot\psi}$     $F(z)$     OBS     $S_{\dot\delta}$     $S_{\dot\psi}$

50

## Fig. 5

Frequency [Hz]

## Fig. 6

Frequency [Hz]

**EP 2 256 022 B1**

**REFERENCES CITED IN THE DESCRIPTION**

**Patent documents cited in the description**

- EP 1481882 A
- DE 102006024327 A1
- EP 1318069 A